# EUROPEAN PATENT SPECIFICATION

(11) **EP 0 485 490 B1**
(45) Date of publication and mention of the grant of the patent: **21.02.1996**
(21) Application number: 90912517.1
(22) Date of filing: 30.07.1990
(51) Int. Cl.: H04B 10/08

(54) **A MONITOR UNIT FOR MONITORING AN OPTICAL WAVEGUIDE**
OPTISCHE WELLENLEITERÜBERWACHUNGSEINHEIT
MONITEUR DE CONTROLE D'UN GUIDE D'ONDES OPTIQUE

(30) Priority: 31.07.1989 GB 8917488
(43) Date of publication of application: 20.05.1992
(73) Proprietor: BRITISH TELECOMMUNICATIONS public limited company, London EC1A 7AJ (GB)
(72) Inventor: HEALEY, Peter, Suffolk IP4 3RQ (GB); SMITH, David, William Braeside Mill Lane, Suffolk IP12 0PL (GB)
(74) Representative: Roberts, Simon Christopher
(86) International application number: GB9001180
(87) International publication number: WO9102416

(56) References cited:
- GB-A- 2 038 017
- GB-A- 2 051 355
- GB-A- 2 145 514
- US-A- 4 765 738
- J.E.E. Journal of Electronic Engineering, Volume 22, No. 217, January 1985,(Kanagawa, JP), A. TANIGUCHI: "Developing Fiber Optic Measurement for Long Distance and High Resolution", pages 66-70 see figure 1; page 66, column 3, lines 1-9

## Description

The invention relates to a monitor unit for monitoring an optical waveguide and to a communications system incorporating such a monitor unit. The invention relates particularly, but not exclusively, to monitor units and communications systems in which the optical waveguide comprises an optical fibre.

It is well known in the art to form a communications system having a communications optical fibre, a transmitter for transmitting data in the form of an optical signal along the communications optical fibre, and a receiver for receiving the signal. A disadvantage of a transmission system of this type is that it does not provide an inherently secure means of transmission in that the process of physically interfering with the communications system is becoming increasingly simple to perform. There is a need, therefore, for means for monitoring communications systems for such interference.

Also, it is often desired to monitor the waveguide for changes caused by other means. For example a sensor may be connected to the waveguide which physically affects the waveguide in response to a change in some parameter, for example temperature or pressure. In other cases the waveguide may react or change in response to its environment, for example temperature changes or splice ageing, and it is desired to monitor these changes.

One known way of monitoring a communications system is to apply a corrugated attachment to the outer surface of a fibre at a point at which physical interference of the system is anticipated or at the location of the sensor, the sensor mechanism applying pressure to the corrugations. When the fibre is interfered with or it activated by the sensor, the corrugations are caused to press onto the outer surface of the fibre thereby causing the loss of some of the signal being received. This reduces the total optical energy of the signal so by monitoring the total optical energy physical interference may be detected. Similarly mode transfers can be caused by environmental influences such as temperature or ground movements acting on the waveguide directly.

Attention is drawn to GB-A-2 038 017 which disclose a test apparatus for testing a length of optical fibre for faults.

The present invention provides a system comprising an optical signal transmitter, a communications waveguide to receive said optical signal and a detector apparatus to detect the presence of interference or environmental influences on the communications waveguide, said detector apparatus comprising a detector waveguide optically coupled to said communications waveguide; a photodetector; coupling means optically coupled to said detector waveguide and to said photodetector; and, monitoring means connected to the photodetector; characterised in that; said optical signal from said optical signal transmitter comprises an optical data signal; said system comprising a communication system and an optical signal receiver is coupled to the end of the communications waveguide opposite to the optical data signal transmitter to receive said data optical signal; said detector apparatus is arranged to monitor said communications waveguide whilst it is carrying the optical data signal; said coupling means is arranged to couple a proportion of an optical signal having a plurality of propagation states from the communications waveguide to the detector waveguide and thence to the photodetector; said photodetector is arranged to detect optical energy in less than all propagation states of said proportion of the optical signal passed to the photodetector and; said monitoring means is adapted to detect the presence of interference or environmental influences on said communications waveguide by changes in said detected propagation states of said proportion of the optical signal detected by said photodetector.

The propagation states may be polarisation states or transverse states (modes).

When the communications waveguide to be monitored is an optical fibre, the coupling means may comprise a curved optical waveguide, and clamping means for clamping the communications waveguide into a curved position which at least substantially conforms to the inner side of the curved waveguide, the respective refractive indices of the communications waveguide and the curved waveguide and the radius of curvature of the inner surface of the curved waveguide being such that in use optical radiation is leaked from the waveguide to be monitored and coupled from the curved waveguide into the detector waveguide. The monitoring means may thus be coupled to the communications waveguide at any convenient point along the said waveguide and in a relatively simple manner.

Alternatively, the coupling means may comprise a second waveguide couplable in series to the waveguide to be monitored, and transversely coupled to the detector waveguide at a coupling region. An optical signal propagating along the communications waveguide is coupled into the second waveguide and then a portion of the signal is coupled from the second waveguide into the detector waveguide.

When the optical waveguide to be monitored is a multimode waveguide the detector waveguide may be a multimode waveguide with the photodetector positioned to detect, preferentially, higher order modes of the optical signal. High order modes in an optical signal are more sensitive to external influences on a waveguide along which the signal is propagating than lower order modes, and thus by positioning the photodetector to detect preferentially the higher order modes, the monitoring means will be more sensitive to the external influences. Conveniently, the photodetector is positioned in a misaligned position relative to the detector waveguide in order that it may detect, principally, the high order modes.

Alternatively, the monitoring means may further comprise a filter positioned to filter out, preferentially, lower order modes of the optical signal and a photodetector positioned to detect the remaining modes of the signal. The photodetector may now be positioned in alignment with the detector waveguide.

Conveniently, the filter has a substantially circular cross-section, and is positioned coaxially with the detector waveguide. Light emerging from the detector waveguide will diverge as it leaves the waveguide. Low order modes will diverge to a lesser extent than high order modes. Thus by positioning the filter in alignment with the detector waveguide, lower order modes will be prevented from reaching the photodetector, whilst most of the high order modes will reach the photodetector unhindered.

Alternatively, the filter may comprise a knife edge which is positioned off-axis relative to the detector waveguide. The filter will then prevent a range of modes from reaching the photodetector, but by appropriately positioning the filter, most of the low order modes may be blocked, whereas most of the high order mode will reach the photodetector.

When the waveguides are each polarisation independent single mode waveguides, filter means may be positioned between the detector optical waveguide to filter out one polarisation state to allow one selected polarisation state to pass through. As linearly polarised light is coupled into the communications fibre, its state of polarisation, (SOP) passes through various states of elliptical polarisation due to combinations of linear and circular birefringence and polarisation-coupling perturbations that are randomly distributed along its length. When such light is coupled into the monitoring means, the filter allows only one of the two orthogonal field components to pass, resulting in a polarisation sensitive monitor signal.

The filter may comprise a polarising sheet or wire grid formed from dichroic polarisers. Alternatively it may comprise a birefringent crystal, for example calcite, or a polarised beam splitter, or a Brewster window.

Advantageously, the detector waveguide is substantially identical to the communications waveguide, as insertion losses at the points of connection of the monitoring means to the communication waveguide to be monitored are reduced.

In a monitor unit having a second waveguide transversely coupled to the detector waveguide at a coupling region, the filter may comprise the coupling region itself.

The detector and second waveguides and the communications waveguide to be monitored may each comprise lithium niobate substrates having a titanium in-diffused waveguiding area. The principal application of the present invention is envisaged to be with waveguides which comprise optical fibres, for example in optical fibre communications networks.

When the communications fibre is disturbed the state in which the optical signal propagating changes. For example, the polarisation state in a monomode fibre or the transverse modal state in a multimode fibre. Because only some states are monitored the energy monitored will vary as the disturbance changes the propagation states thus indicating physical interference. The monitor unit may be used in a passive form, in which a portion of the transmitted data signal itself is used for the monitoring purposes. In such a system, interference may be detected only when data is actually being transmitted. Alternatively, the signal portion monitored by the monitor unit may be a portion of a specially transmitted monitor signal which is transmitted purely for monitoring purposes and is arranged not to interfere with any data signals being transmitted. In such a situation, the monitor unit is being used in an active form and will be capable of detecting interference or sensing changes caused by a sensor even when no data is being transmitted.

It has been found that in a typical communications system it is sufficient that the monitoring unit causes 10% of the optical signal to be coupled into the monitor means to allow monitoring.

A plurality of monitor units may be coupled to a communications system at different points along the communications fibre. The location of the physical interference may then also be determined by means of a second monitor unit.

The invention will now be further described by way of example only with reference to the accompanying drawings in which:
Figure 1 is a schematic representation of a monitor unit according to the present invention for use with a single mode transmission system in a passive form;
Figure 2 is a schematic representation of the monitor unit of figure 1 adapted for use in an active form; and
Figure 3 is a schematic diagram of one embodiment of a monitor circuit used in the monitor unit figure 1 or 2.

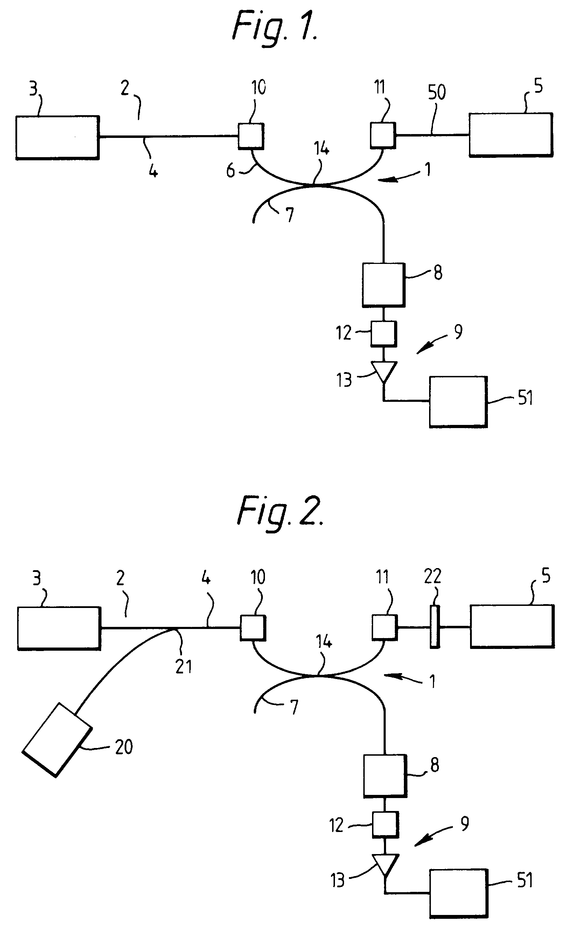

Referring to figure 1, a monitor unit according to the invention is indicated generally by the reference number 1. The unit 1 serves to monitor a transmission system 2 for interference. The transmission system 2 comprises a laser 3, coupled to an optical waveguide 4 and a system receiver 5 coupled to an optical waveguide 50. The monitor unit comprises a first waveguide 6 and a second waveguide 7 coupled to one another at a coupling region 14, a filter 8 and a monitor circuit 9. The monitor unit is connected to the transmission system by standard connectors 10, 11 which couple the first waveguide 6 to the waveguides 4 and 50 respectively. The waveguides 4, 6, 7 and 50 are each substantially identical single mode fibres. A signal transmitted from the laser 3 passes through the coupler 1 which couples about 10% of the signal into the second waveguide 7, leaving about 90% of the signal to return to the waveguide 50 and thence to the receiver 5. The portion of the signal coupled into the second waveguide 7 passes through filter 8 which in this embodiment is a polarisation filter. The filter 8 allows only one of the two orthogonal field components to pass through it, resulting in a polarisation sensitive monitor signal. The monitor signal then passes through the monitor circuit 9 which comprises a low-speed, large-area photodiode 12, which allows for non critical alignment, a low noise and low bandwidth preamplifier 13 and a monitoring means 51 to provide an indication when interference with the waveguide 4 is detected.

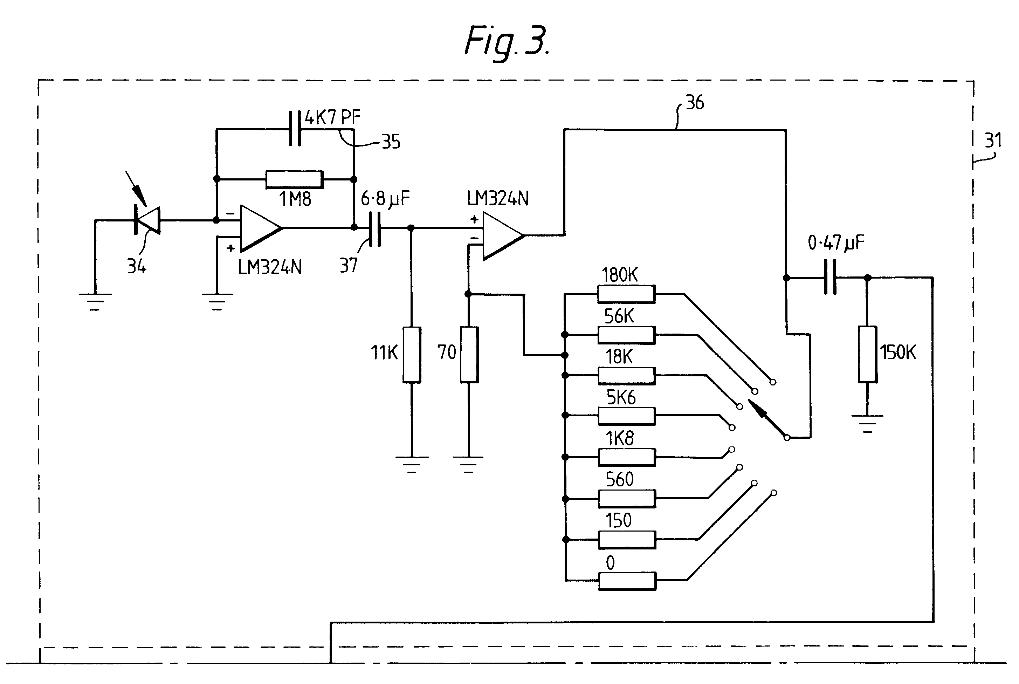

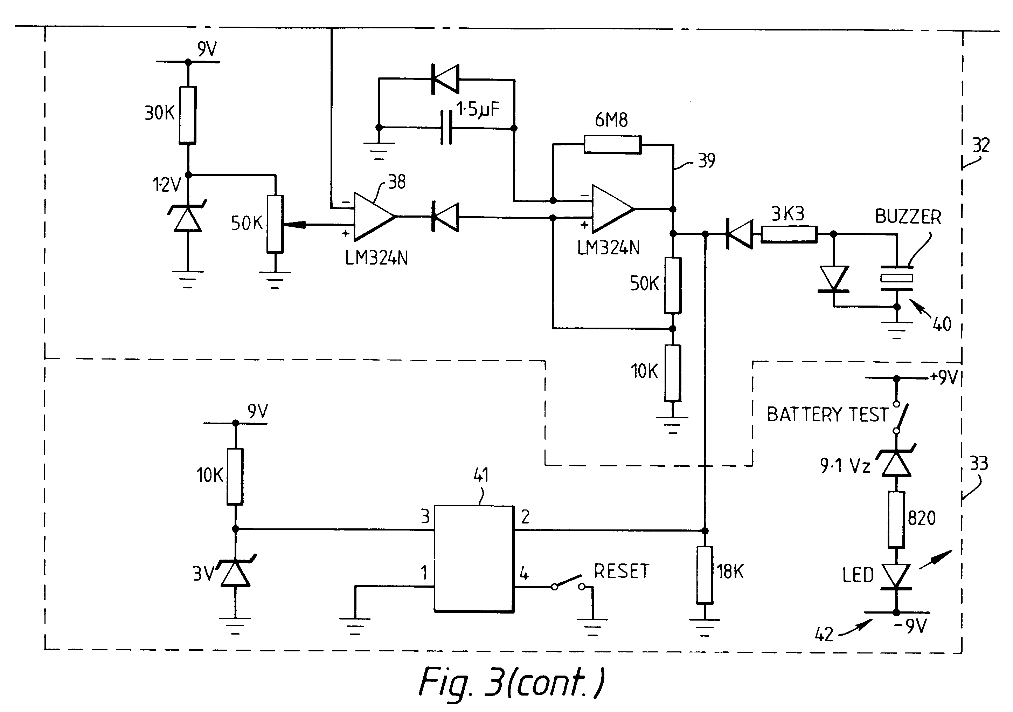

When the transmission waveguide 4 is physically interfered with, the state of polarisation of the optical signal being monitored will fluctuate due to the interference. The monitor circuit 9 will detect such fluctuations, thus allowing the existance of the interference to be determined by, for example, activating a buzzer (see Figure 3).

Referring to figure 2, a monitor unit according to the invention is shown connected to an optical transmission system. The system is similar to that of figure 1, and corresponding parts have been given the same reference numbers. The system of figure 2 additionally comprises a monitor signal source 20 which is a laser coupled to the waveguide 4 by a coupler 21. The source 20 produces a monitor signal which is separate from the signal produced by laser 3 and is arranged such that it does not interfere with the signal produced by the laser 3. In order that the monitor signal does not interfere with the signal produced by laser 3, it is transmitted at a different wavelength to that of the transmitted signal. Alternatively, the monitor signal could be transmitted at the same wavelength as that of the transmitted wavelength, but in an opposite direction to the transmitted signal. The portion of the monitor signal produced by the source 20 rather than the signal produced by laser 3 is monitored by the monitor unit. The monitor unit is here being used in an active form, and can thus detect interference even when no signal is being transmitted by the laser 3. The monitor signal produced by source 20 must be either multiplexed with a signal produced by laser 3 or transmitted via a separate fibre intimately associated with waveguide 4. A filter 22 filters out the monitor signal to ensure that it is not received by the receiver 5. Alternatively, the monitor signal could be mixed with a local optical signal, for example by using coherent detection techniques. Such techniques are polarisation sensitive.

Referring to Figure 3, an embodiment of the monitor means 51 used in the monitor circuit 9 of figure 1 or 2 is shown. The monitor means 51 comprises three sections 31, 32, 33. Section 31 comprises a photodetector 34 and an associated trans impedance preamplifier 35 connected to a switched gain amplifier 36 by a capacitor 37. Section 31 performs the opto-electronic conversion and low-noise amplification of the monitor signal. An electric pass-band of 2 to 17 Hz has been chosen to give maximum sensitivity to the monitor signal whilst minimising the effects of background fluctuations and electrical noise. The switched gain amplifier 36 allows a degree of sensitivity adjustment and ensures that the output voltage swing of section 31 is within the correct range for section 32 for a wide range of input optical power levels. Section 32 comprises a voltage comparator 38 which is triggered when the output voltage swing of section 31 exceeds a preset threshold, followed by a monostable 39 which ensures a fixed duration trigger pulse to drive both a buzzer 40 and section 33. Section 33 comprises a resettable counter 41 which gives an indication of the number of 'alarm' events and is useful if the monitor unit is left unattended. A battery test circuit 42 ensures that the monitor unit is operated within its correct voltage range.

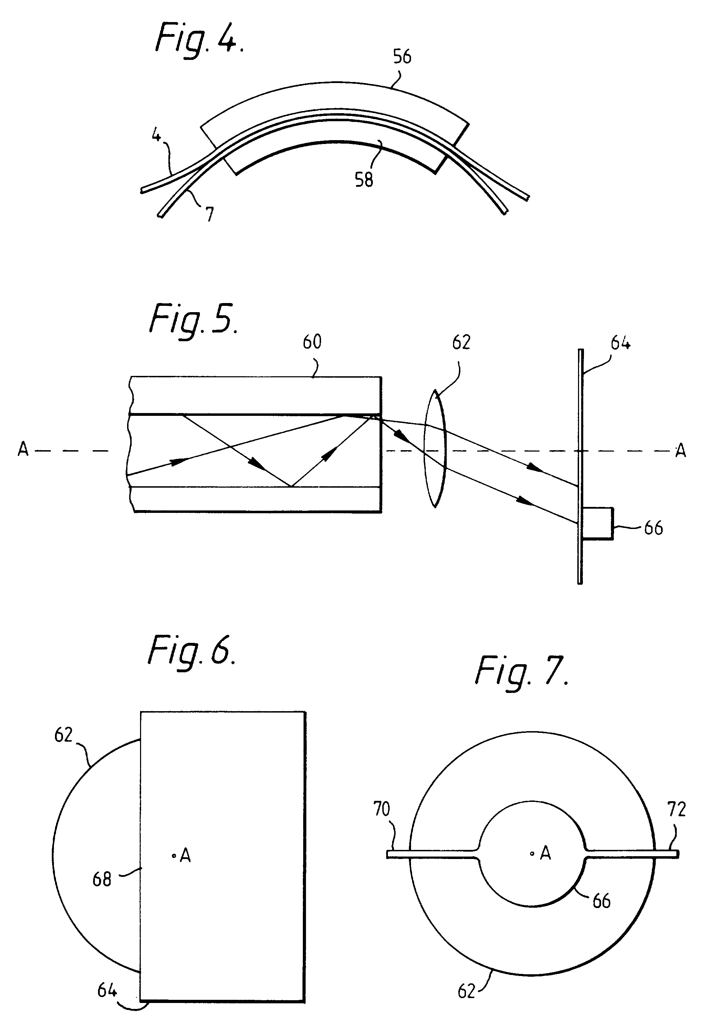

Referring to Figure 4 a coupling means for coupling an optical signal from the waveguide to be monitored 4 comprises a clamping means 56 and 58 which co-operate to hold the fibre 4 and an optical fibre 7 of the monitor unit (not shown) such that optical radiation is leaked from the optical fibre 4 and couples into the fibre 7.

Figure 5 shows an arrangement for monitoring the optical power in the high order propagating in an optical fibre 60. The light exiting the fibre 60 will be at a greater angle to the fibre axis A-A for the higher modes. A lens 62 will therefore focus the different modes to different regions of the lenses focal plane 64. By positioning a photodetector 66 to preferentially detect signals to the periphary of focal plane 64 higher modes are detected preferentially.

An alternative arrangement of preferentially detecting higher order modes is to place a spatial filter between the lens 62 and focal plane 64. Figures 6 and 7 are views along the axis A-A of Figure 5 from the focal plane 64 towards the lens 62 in which blocking filter 64 and 66 have been interposed between the lens 62 and focal plane 64, respectively. The filter 64 of Figure 6 is a blocking filter having a knife-edge 68 positioned to the side of the optical axis A-A, perpendicular to it and blocking all light to the left of the edge 68 from reaching the local plane. The filter 66 of Figure 7 is a circular filter centred on, and perpendicular to, to optical axis A-A supported in position by a pair of support arms 70 and 72.

In each of these arrangement of Figure 6 and Figure 7, a greater proportion of higher order modes reach the focal plane 64 of Figure 5 than lower order modes. A photodetector can therefore be arranged to receive all the light reaching the focal plane 64 and still preferentially detect higher modes propagating in a fibre.

## Claims

1. A system comprising an optical signal transmitter, a communications waveguide (4,50) to receive said optical signal and a detector apparatus to detect the presence of interference or environmental influences on the communications waveguide (4,50), said detector apparatus comprising:
a detector waveguide (7) optically coupled to said communications waveguide (4,50);
a photodetector (12);
coupling means (14) optically coupled to said detector waveguide (7) and to said photodetector (12); and,
monitoring means (51) connected to the photodetector (12);
characterised in that;
said optical signal from said optical signal transmitter (3) comprises an optical data signal;
said system comprising a communication system and an optical signal receiver (5) is coupled to the end of the communications waveguide (4,50) opposite to the optical data signal transmitter (3) to receive said data optical signal;
said detector apparatus is arranged to monitor said communications waveguide whilst it is carrying the optical data signal;
said coupling means is arranged to couple a proportion of an optical signal having a plurality of propagation states from the communications waveguide (4) to the detector waveguide (7) and thence to the photodetector (12);
said photodetector (12) is arranged to detect optical energy in less than all propagation states of said proportion of the optical signal passed to the photodetector (12) and;
said monitoring means (51) is adapted to detect the presence of interference or environmental influences on said communications waveguide (4,50) by changes in said detected propagation states of said proportion of the optical signal detected by said photodetector (12).

2. A system as claimed in claim 1 wherein the first waveguide is an optical fibre (4) and the coupling means (14) comprises a curved optical waveguide (7), and clamping means (56, 58) for clamping the first waveguide (4) into a curved position which at least substantially conforms to the inner side of the curved waveguide (7), the respective refractive indices of the first waveguide (4) and the curved waveguide (7), and the radius of curvature of the inner surface of the curved waveguide being such that in use, optical radiation is leaked from the first waveguide (4) and coupled at the curved waveguide into the detector waveguide (7).

3. A system as claimed in claim 1 wherein the coupling means comprises a second waveguide (6) couplable in series to the first waveguide (4), and transversely coupled to the detector waveguide (7) at a coupling region (14).

4. A system as claimed in any one of the preceding claims wherein the detector waveguide (7) is a multimode waveguide and the photodetector (12) is positioned to detect preferentially high order modes of the optical signal.

5. A system as claimed in claim 4 further comprising a filter (66 or 68) positioned to filter out lower order modes of the optical signal.

6. A system as claimed in claim 5 wherein the filter (66) has a substantially circular cross-section, and is positioned coaxially with the detector waveguide (6).

7. A system as claimed in claim 5 wherein the filter comprises a knife edge (64) and is positioned off-axis relative to the detector waveguide.

8. A system as claimed in any one of claims 1 to 4 wherein the first and detector waveguides are each polarisation independent single mode waveguides and further comprising a filter capable of filtering out one polarisation state to allow one selected polarisation state to pass to the photodetector.

9. A system as claimed in claim 8 wherein the detector waveguide (6) is substantially identical to the first waveguide (4).

10. A system as claimed in claim 5 or 8 wherein the filter comprises the coupling region.

11. A system as claimed in any one of the preceding claims wherein each of the waveguides is an optical fibre.

12. A system as claimed in any preceding claim wherein 10% of the optical signal is coupled into the coupling means.

## Patentansprüche

1. System mit einem Transmitter für ein optisches Signal einem Übertragungsleiter (4, 50) zum Empfangen des optischen Signals und einer Detektorvorrichtung zum Erfassen des Vorhandenseins einer Interferenz oder von Umgebungseinflüssen auf den Übertragungsleiter (4, 50), die Detektorvorrichtung enthält:
einen Detektorleiter (7), der optisch mit dem Übertragungsleiter (4, 50) gekoppelt ist;
einen Photodetektor (12);
Verbindungsmittel (14), die optisch mit dem Detektorleiter (7) und dem Photodetektor (12) gekoppelt sind, und
Anzeigemittel (41), die mit dem Photodetektor (12) verbunden sind,
**dadurch gekennzeichnet**, daß
das optische Signal von dem Transmitter (3) ein optisches Datensignal enthält;
das System ein Kommunikationssystem enthält und ein optischer Signalempfänger (5) mit dem Ende des Übertragungsleiters (4, 50) gekoppelt ist, gegenüberliegend zu dem Transmitter für das Datensignal (3), zum Empfangen des optischen Signals;
die Detektorvorrichtung zum Anzeigen des Übertragungsleiters angeordnet ist, während der Leiter das optische Signal überträgt;
die Verbindungsmittel zum Verbinden eines Anteils eines optischen Signals angeordnet sind, das mehrere Ausbreitungszustände ausgehend von dem Übertragungsleiter (4) zu dem Detektorleiter (7) und folglich zu dem Photodetektor (12) aufweist;
der Photodetektor (12) zum Erfassen von optischer Energie in weniger als allen Ausbreitungszuständen des Anteils des zu dem Photodetektor (12) übergebenen optischen Signals angeordnet ist, und
die Anzeigemittel (51) zum Erfassen des Vorhandenseins von der Interferenz oder der Umgebungseinflüsse auf den Übertragungsleiter (4, 50) geeignet sind, und zwar durch Änderungen der erfaßten Ausbreitungszustände des Anteils des optischen Signals, erfaßt durch den Photodetektor (12).

2. System nach Anspruch 1, wobei der erste Leiter eine optische Faser (4) ist und die Verbindungsmittel (14) einen gebogenen optischen Leiter (7) enthalten, und wobei Klemmmittel (56, 58) vorgesehen sind, zum Klemmen des ersten Leiters (4) in eine gebogene Position, welche zumindest im wesentlichen mit der inneren Seite des gebogenen Leiters (7) übereinstimmt, wobei weiterhin die entsprechenden Brechungsindizes des ersten Leiters (4) und des gebogenen Leiters (7) sowie der Radius der Biegung der inneren Oberfläche des gebogenen Leiters im Betrieb derart sind, daß optische Strahlung aus dem ersten Leiter (4) austritt und bei dem gebogenen Leiter in den Detektorleiter (7) eingekoppelt wird.

3. System nach Anspruch 1, wobei die Verbindungsmittel einen zweiten Leiter (6) enthalten, der in Serie mit dem ersten Leiter (4) koppelbar ist und quer mit dem Sensorleiter (7) in einem Koppelbereich (14) gekoppelt ist.

4. System nach irgendeinem der vorangehenden Ansprüche, wobei der Detektorleiter (7) ein Multimodenleiter ist und der Photodetektor (12) zum vorzugsweisen Erfassen von Modi einer hohen Ordnung des optischen Signals positioniert ist.

5. System nach Anspruch 4, mit einem Filter (66 oder 68), das zum Herausfiltern von Modi mit einer niedrigen Ordnung des optischen Signals angeordnet ist.

6. System nach Anspruch 5, wobei das Filter (66) einen im wesentlichen kreisförmigen Querschnitt aufweist und koaxial zu dem Detektorleiter (6) positioniert ist.

7. System nach Anspruch 5, wobei das Filter eine Messerkante (64) enthält und außerachsig relativ zu dem Detektorleiter positioniert ist.

8. System nach irgendeinem der Ansprüche 1 bis 4, wobei der erste und der Detektorleiter jeweils polarisationsunabhängige Einzelmodenleiter sind und wobei das System ferner ein Filter enthält, das einen Polarisationszustand herausfiltern kann, so daß ein ausgewählter Polarisationszustand zu dem Photodetektor übertragen werden kann.

9. System nach Anspruch 8, wobei der Detektorleiter (6) im wesentlichen identisch mit dem ersten Leiter (4) ist.

10. System nach Anspruch 5 oder 8, wobei das Filter den Koppelbereich enthält.

11. System nach irgendeinem der vorangehenden Ansprüche, wobei jeder Leiter eine optische Faser ist.

12. System nach irgendeinem der vorangehenden Ansprüche, wobei 10 % des optischen Signals in die Verbindungsmittel eingekoppelt wird.

## Revendications

1. Système comprenant un émetteur de signal optique, un guide d'ondes de communications (4, 50), afin de recevoir ledit signal optique et un appareil de détecteur destiné à détecter la présence d'interférences ou d'influences de l'environnement sur le guide d'ondes de communications (4, 50), ledit appareil de détecteur comprenant :
un guide d'ondes de détecteur (7) couplé optiquement audit guide d'ondes de communications (4, 50),
un photodétecteur (12),
un moyen de couplage (14) couplé de façon optique audit guide d'ondes de détecteur (7) et audit photodétecteur (12), et
un moyen de surveillance (51) relié au photodétecteur (12), caractérisé en ce que,
ledit signal optique provenant dudit émetteur de signal optique (3) comprend un signal de données optiques,
ledit système comprenant un système de communications et un récepteur de signal optique (5) est couplé à l'extrémité du guide d'ondes de communications (4, 50) opposée à l'émetteur de signal de données optiques (3) afin de recevoir ledit signal optique de données,
ledit appareil de détecteur étant agencé pour surveiller ledit guide d'ondes de communications pendant qu'il transporte le signal de données optiques,
ledit moyen de couplage étant agencé pour coupler une certaine proportion d'un signal optique présentant une pluralité d'états de propagation du guide d'ondes de communications (4) vers le guide d'ondes de détecteur (7) et de ce fait le photodétecteur (12),
ledit photodétecteur (12) étant agencé pour détecter l'énergie optique dans moins de la totalité des états de propagation de ladite proportion du signal optique passant jusqu'au photodétecteur (12), et
ledit moyen de surveillance (51) étant adapté pour détecter la présence d'interférences ou d'influences de l'environnement sur ledit guide d'ondes de communications (4, 50) par les changements desdits états de propagation détectés de ladite proportion du signal optique détectée par ledit photodétecteur (12).

2. Système selon la revendication 1, dans lequel le premier guide d'ondes est une fibre optique (4) et le moyen de couplage (14) comprend un guide d'ondes optique incurvé (7), et un moyen de fixation (56, 58) destiné à fixer le premier guide d'ondes (4) en une position incurvée qui se conforme au moins substantiellement au côté intérieur du guide d'ondes incurvé (7), les indices de réfraction respectifs du premier guide d'ondes (4) et du guide d'ondes incurvé (7), et le rayon de courbure de la surface intérieure du guide d'ondes incurvé étant tels qu'en utilisation, le rayonnement optique fuie depuis le premier guide d'ondes (4) et soit couplé au niveau du guide d'ondes incurvé dans le guide d'ondes de détecteur (7).

3. Système selon la revendication 1, dans lequel le moyen de couplage comprend un second guide d'ondes (6) qui peut être couplé en série au premier guide d'ondes (4), et être couplé transversalement au guide d'ondes de détecteur (7) au niveau d'une région de couplage (14).

4. Système selon l'une quelconque des revendications précédentes dans lequel le guide d'ondes de détecteur (7) est un guide d'ondes multimodes et le photodétecteur (12) est positionné de façon à détecter de préférence les modes d'ordres élevés du signal optique.

5. Système selon la revendication 4, comprenant en outre un filtre (66 ou 68) positionné de façon à filtrer les modes d'ordres inférieurs du signal optique.

6. Système selon la revendication 5 dans lequel le filtre (66) présente une section transversale pratiquement circulaire et est positionné de façon coaxiale avec le guide d'ondes de détecteur (6).

7. Système selon la revendication 5 dans lequel le filtre comprend un tranchant de lame (64) et est positionné écarté de l'axe par rapport au guide d'ondes de détecteur.

8. Système selon l'une quelconque des revendications 1 à 4 dans lequel le premier guide d'ondes et le guide d'ondes de détecteur sont chacun des guides d'ondes à mode unique indépendants de la polarisation et comprenant en outre un filtre capable de filtrer un état de polarisation afin de permettre qu'un état de polarisation sélectionné passe vers le photodétecteur.

9. Système selon la revendication 8, dans lequel le guide d'ondes de détecteur (6) est pratiquement identique au premier guide d'ondes (4).

10. Système selon la revendication 5 ou la revendication 8 dans lequel le filtre comprend la région couplage.

11. Système selon l'une quelconque des revendications précédentes dans lequel chacun des guides d'ondes est une fibre optique.

12. Système selon l'une quelconque des revendications précédentes dans lequel 10 % du signal optique est couplé dans le moyen de couplage.
